Europäisches Patentamt

European Patent Office

Office européen des brevets

(19)

(11) Publication number: **0 292 616 B1**

(12) EUROPEAN PATENT SPECIFICATION

(45) Date of publication of patent specification: **20.05.92**　(51) Int. Cl.⁵: **C09K 11/80**

(21) Application number: **87200994.9**

(22) Date of filing: **26.05.87**

(54) **X-ray conversion into light.**

(43) Date of publication of application:
**30.11.88 Bulletin 88/48**

(45) Publication of the grant of the patent:
**20.05.92 Bulletin 92/21**

(84) Designated Contracting States:
**BE DE FR GB**

(56) References cited:
**EP-A- 0 161 820**

(73) Proprietor: **AGFA-GEVAERT naamloze vennootschap**
**Septestraat 27**
**B-2510 Mortsel(BE)**

(72) Inventor: **Terrell, David Richard**
**Diependaele 4**
**B-2548 Lint(BE)**
Inventor: **Blasse, George**
**Kennedylaan 36**
**3981 GC Bunnik(NL)**

**Description**

The present invention relates to a process for the conversion of X-rays into visible light.

It is well known that X-rays can cause appropriate substances to luminesce. Substances showing the phenomenon of luminescence under the influence of X-rays are commonly called phosphors.

For the production of radiographs in conjunction with photographic silver halide emulsion materials these phosphors are used in a supported or self-supporting binder layer forming an X-ray conversion screen.

The phosphors used in said screens should be luminescent but not exhibit appreciable long lived emission after the X-ray source is switched off. If a screen with marked-long lived emission were to be used, it would retain its image after the X-ray beam had ceased and a fresh film contacted with it would gain a so-called ghost impression that would interfere with the next image to be made. This phenomenon is also known under the term "after-glow".

To be useful in medical X-ray diagnosis the phosphor used in an X-ray conversion screen also called intensifying screen should be capable of a bright and intensive emission to enable the operator to work with a low dose of X-rays not harmful to the patient.

For that purpose the phosphor must absorb X-rays effectively and must convert efficiently the absorbed X-ray radiation into visible or near visible light. Thus a practically useful phosphor should have both a high X-ray absorption capacity and a high X-ray conversion efficiency.

A survey of phosphors for use in medical X-ray conversion screens is given by A. L. N. Stevels in the bulletin Medica Mundi, 20, (1975) No. 1, p. 1-22.

There are thousands of phosphor materials that are luminescent upon absorbing cathode-rays (electron beam) or ultra-violet light, but such gives no indication about the conversion efficiency of X-rays into light.

The utilization of $(Y_{1-x} Tb_x)_3 M_5 O_{12}$ [M = Al, Ga] phosphors for cathode-ray tube (CRT) applications has been reported by D.J.Robbins, B.Cockayne, B.Lent and J.L.Glarper in Solid State Communications, Vol 36, pp 691-693, (1980); by B.R.Critchley and J.Lunt in Soc. for Information Display 1983 Digest of Technical Papers pp. 122 to 123; and by V.A. Krasnoperov, E.T. Bezruk and T.K. Vaevodskaya $[(Y_{1-x} Tb_x)_3 Ga_5 O_{12}]$ in Izv. Akad. SSSR Neorg. Mater. Vol 12 (1976) pp 1427-1429. Furthermore in US patent 4,180,477 a CRT-phosphor with the composition :

$$RE_{3-x} Tb_x Al_{5-z} Ga_z O_{12} (RE_2O_3)_w$$

is disclosed where RE is one or more of Y, Gd, Lu and Bi; z = 0 to 5; w = 0.02 to 0.05 and x = 0.01 to 0.5.

In FR-P 2,557,128 a CRT-phosphor with the composition :

$$Y_3 Al_x Ga_{s-x} O_{12} : Tb$$

is disclosed.

In GB-P 1,600,492 a CRT-phosphor with the composition :

$RE_{3-x} A_x Al_{(5-(y+z))} Sc_y Ga_x O_{12}$ is disclosed where RE is one or more of Y, Gd and Lu; A is either Tb or (Tb + Ce) and $0.01 \leq x \leq 0.5$; $0 \leq y \leq 2$; $0 \leq Z < 5$ and $1 \leq (y + z) < 5$.

A CRT phosphor with the composition :

$$(Y_{3-x-y} Tb_x RE_y) (Al_{5-w} Ga_w) O_{12}$$

is disclosed in World Patent 86/04347 where RE is one (or more) 4f-type rare earth(s) other than Tb; $0.09 < x < 0.7$ and $1.5 < w < 2.5$.

European Patent Application No. 86201485.9 relates to the use of Gadolinium Gallium Garnet phoshors doped with terbium for the conversion of X-rays into visible light. No indication has been given with respect to the use of phosphor compositions with gadolinium partially or completely replaced with Y and/or Lu and gallium partly replaced by Al for the conversion of X-rays into visible light.

EP-A-0 161 820 discloses cathode-ray luminiscent phosphors having the following chemical composition (expressed in atomic proportions) :

$$(Y_{3-x-y} Gd_x Pr_y) (Ga_{5-2} Al_2) O_{12}$$

where $0.0001 \leqq y \leqq 0.5$
$0 \leqq x \leqq 3 - y$, and
$0 \leqq z \leqq 5$.

It is an object of the present invention to provide a process for the conversion of X-rays very efficiently into blue and/or green light without prohibitive after-glow using particular phosphors being gadolinium gallium garnet compounds as defined hereinafter.

It is another object of the present invention to use said phosphors in a binder of a X-ray conversion screen suitable for use in radiography with appropriately spectrally sensitized silver halide emulsion materials.

Other objects and advantages of the present invention will appear from the further description.

In accordance with the present invention there is provided a process for the conversion of X-rays into blue and/or green ligth with a phosphor which on exposure to X-rays emits light the spectrum of which contains main intensity lines below 478 nm and/or main intensity lines between 530 and 570 nm, characterized in that said phosphor has the following empirical formula :

$$(Gd_{1-w-x} \; Ln_w \; A_x)_{8-y} \; (Ga_{1-z} \; Al_z)_y \; O_{12}$$

wherein : Ln is Y; A is one or more rare earth activator elements other than gadolinium, lutetium and praseodymium, and at least 50 atom % of A is trivalent terbium; $1.0 > w \geqq 0$; $0.12 > x > 0$; $5.20 > y > 4.88$; $0.66 > z > 0$ for $0.5 > w \geqq 0$ and $0.8 > z > 0$ for $1.0 > w \geqq 0.5$.

The phosphor used according to the present invention consists preferably for at least 95 % of a composition having the above empirical formula, the main impurities or by-products being unreacted gadolinium, gallium, aluminium and Ln oxides and; Ln - Al oxidic and/or Ln - Ga oxidic compounds, not having the garnet crystal structure. The garnet structure is exemplified in Philips Techn. Tijdschrift Vol 41 (2) (1983), p. 35 as $Gd_3 Fe_{12} O_{12}$ (gadolinium iron garnet) compound suited for use in magnetic bubble memory devices.

According to a preferred embodiment y is in the range $4.92 \geqq y \geqq 5.10$.

In the case of A being mainly $Tb^{3+}$ a high X-ray conversion into green light is obtained for x in the range $0.12 > x > 0.025$ and a high X-ray conversion into blue light is obtained for x in the range $0.06 > x > 0.0025$.

A particularly high X-ray conversion into green light is obtained for A being $Tb^{3+}$ and having w, x, y and z values in the ranges $0.8 > w \geqq 0$; $0.105 > x > 0.035$; $5.16 > y > 4.94$; $0.6 \geqq z \geqq 0.1$.

The optimum X-ray conversion into green light is obtained at a $Tb^{3+}$ concentration of 5 to 9 atom % and into blue light at a $Tb^{3+}$ concentration of 5 to 9 atom % and into blue light at a $Tb^{3+}$ concentration of 0.6 to 2 atom % with respect to the total content of the rare earth elements.

The luminescence intensity of said garnet phosphors doped with terbium and wherein gadolinium is partly replaced by aluminium is superior to that of gadolinium-gallium garnet phosphors doped with terbium and likewise superior to that of commercial green light emitting terbium doped $Gd_2 O_2 S$ phosphors.

The phosphors used in the X-ray screens according to the present invention have a particularly good chemical stability and their emission power is practically not reduced by moisture and oxygen contained in air.

The invention is illustrated by accompanying drawings in which :

Figure 1     represents the relative energy (R.E.) versus wavelength (nm) curve of light emitted by the phosphor prepared according to example 2 when using X-ray excitation.

Figure 2     represents the relative emission intensity (R.E.I.) for the 542 nm emission band versus x in phosphors with the formula $(Gd_{1-x}Tb_x)_3 \; (Ga_{0.5}Al_{0.5})_5 O_{12}$ obtained according to examples 2 to 7.

Figure 3     represents the relative emission intensity (R.E.I.) for the 542 nm emission band versus y in phosphors with the formula $(Gd_{0.94}Tb_{0.06})_{8-y} \; (Ga_{0.6}Al_{0.4})_y O_{12}$ obtained according to examples 8 to 13.

Figure 4     represents the relative emission intensity (R.E.I.) for the 542 nm emission band versus z in phosphors with the formula $(Gd_{0.94}Tb_{0.06})_3 \; (Ga_{1-z}Al_z)_5 O_{12}$ obtained according to examples 2, 11 and 14 to 17 and comparative example 1.

Figure 5     represents the relative emission intensity (R.E.I.) for the 542 nm emission band versus w in phosphors with the formula $(Gd_{0.94-w}Y_wTb_{0.06})_3 \; Ga_5 O_{12}$ obtained according to examples 20 to 24 and comparative example 1.

Figure 6     represents the relative emission intensity (R.E.I.) for the 542 nm emission band versus z in phosphors with the formula $(Y_{0.846}Gd_{0.094}Tb_{0.06})_3 \; (Ga_{1-z}Al_z)_5 O_{12}$ obtained according to

examples 23 and 25 to 29.

Figure 7    represents the relative emission intensity (R.E.I.) for the 542 nm emission band versus w in phosphors with the formula $(Gd_{0.94-w}Y_wTb_{0.06})_3$ $(Ga_{0.3}Al_{0.7})_5O_{12}$ obtained according to examples 16 and 30 to 32.

Figure 8    represents the relative emission intensity (R.E.I.) for the 542 nm emission band versus z in phosphors with the formula $(Gd_{0.6267}Y_{0.3133}Tb_{0.06})_3(Ga_{1-z}Al_z)_5O_{12}$ obtained according to examples 20, 30 and 33 to 35.

Figure 9    represents the relative emission intensity (R.E.I.) for the 542 nm emission band versus x in phosphors with the formula $(Gd_{1-x}Tb_x)_{2.89}(Ga_{0.6}Al_{0.4})_{5.11}O_{12}$ obtained according to examples 36 to 41.

Figure 10    represents the relative emission intensity (R.E.I.) for the 542 nm emission band versus z in phosphors with the formula $(Gd_{0.98}Tb_{0.02})_{2.89}(Ga_{1-z}Al_z)_{5.11}O_{12}$ obtained according to examples 40, 42 to 45 and comparative example 3.

Figure 11    represents the relative energy (R.E.) versus wavelength (nm) curve of light emitted by the phosphor prepared according to example 47 when using X-ray excitation.

Figure 12    represents the relative emission intensity (R.E.I.) for the 383 nm emission band versus x in phosphors with the formula $(Gd_{1-x}Tb_x)_{2.912}(Ga_{0.6}Al_{0.4})_{5.088}O_{12}$ obtained according to examples 47 to 53.

Figure 13    represents the $I_{383\ nm}/I_{542\ nm}$ peak height ratios for versus x in a semi-logarithmic plot for phosphors with the formula $(Gd_{1-x}Tb_x)_{2.89}(Ga_{0.6}Al_{0.4})_{5.11}O_{12}$ obtained according to examples 36 to 41 (curve 1) and for phosphors with the formula $(Gd_{1-x}Tb_x)_{2.912}(Ga_{0.6}Al_{0.4})_{5.088}O_{12}$ obtained according to examples 47 to 53 (curve 2).

Figure 14    represents the relative emission intensity (R.E.I.) for the 383 nm emission band versus y in phosphors with the formula $(Gd_{0.992}Tb_{0.008})_{8-y}(Ga_{0.5}Al_{0.5})_yO_{12}$ obtained according to examples 54 to 62.

Figure 15    represents the relative emission intensity (R.E.I.) for the 383 nm emission band versus z in phosphors with the formula $(Gd_{0.992}Tb_{0.008})_{2.88}(Ga_{1-z}Al_z)_{5.12}O_{12}$ obtained according to examples 59 and 63 to 69.

The preparation of phosphor compounds for use according to the present invention may proceed via dry or wet mixing techniques, with or without using a flux in the firing, with one or more firings at temperatures between about 600 and about 1600°C in the presence of air or an inert atmosphere e.g. consisting of nitrogen. The last firing may take place in a slightly reducing atmosphere to convert $Tb^{4+}$ to $Tb^{3+}$.

Efficient mixing of the ingredients is important. The ingredients being mixed may be in different forms. The activator or mixture of activators, also called dopants, may be introduced in various ways, e.g. as oxides, as coprecipitated oxalates, as coprecipitated hydroxides or as doped host metal oxides.

Gadolinium, one of the host metals may be introduced for example as a coprecipitated oxalate with the activator or activators, as gadolinium oxalate, as gadolinium hydroxide or as gadolinium oxide. Yttrium may be introduced for example as a coprecipitated oxalate with the activator or activators, as yttrium oxalate, as yttrium hydroxide or as yttrium oxide. Gallium may be introduced for example as gallium oxide, gallium oxyhydroxide, gallium hydroxide or gallium oxalate. Aluminium may be introduced for example as $\alpha$-aluminium oxide, $\gamma$-aluminium oxide, a mixture of $\alpha$- and $\gamma$-aluminium oxides, aluminium oxyhydroxide, aluminium hydroxide or aluminium oxalate.

When starting with a mixture of oxides or oxides and oxalates in the preparation of these phosphors mixing before firing is preferably carried out in the presence of an inert liquid e.g. a volatile liquid such as ethanol. This liquid is evaporated from the resulting slurry before the mixture is fired.

The following four mixing techniques used separately or together yield very satisfactory results :

(1) The coprecipitation of metal hydroxides using ammonium hydroxide and the corresponding metal nitrates or chlorides,

(2) the mixing in slurry form of Tb-doped gadolinium oxalate or pyrolyzed gadolinium oxalate; Tb-doped yttrium oxalate or pyrolyzed yttrium oxalate; GaOOH or $Ga_2O_3$ and $\alpha$-$Al_2O_3$,

(3) the mixing in slurry form of $Gd_2O_3$; $Tb_4O_7$; $Y_2O_3$; GaOOH or $Ga_2O_3$; and $\alpha$-$Al_2O_3$,

(4) the mixing of $Gd_2O_3$; $Tb_4O_7$; $Y_2O_3$; GaOOH or $Ga_2O_3$; and $\alpha$-$Al_2O_3$ with flux compounds to provide improved reactive contact during firing.

Among the preferred flux compounds for use in the firing(s) are $BaF_2$, $BaCl_2$, $K_2SO_4$, $Na_2SO_4$, $L_2SO_4$, KBr and LiF. Other flux compounds are $MgCl_2$, $AlF_3$, $YF_3$, $B_2O_3$ and $H_3BO_3$.

Detailed preparation techniques are given hereinafter in examples 1 to 69. The crystal structures of the samples were checked by powder X-ray diffraction spectra using Cu $K_\alpha$ radiation.

EXAMPLE 1

282.5 g of gadolinium oxide and 18,5957 g of terbium oxide were dissolved in 700 ml concentrated nitric acid with heating and the resulting solution evaporated until a nitrate glass was formed. This was dissolved in 2.0725 l doubly destilled water and 4.725 l of 0.6 M ammonium oxalate solution were added dropwise with stirring, whereupon $Gd_{1.88}Tb_{0.12}(C_2O_4)_3$ precipitated. This was separated by filtration and washed with doubly distilled water till neutral.

The oxalate was dried overnight at 150°C. Yield : 534.7 g of $Gd_{1.88}Tb_{0.12}(C_2O_4)_3.4.43 H_2O$.

EXAMPLE 2

9.14894 g of $Gd_{1.88}Tb_{0.12}(C_2O_4)_3.4.43 H_2O$ (from Example 1), 2.17045g of $Ga_2O_3$ and 1.18060 g of α-$Al_2O_3$ were mixed for 15 minutes in a planetary ball mill in the presence of 8,6 ml of ethanol. After evaporating off the ethanol, the mixture was fired in a compressed state at 1450°C in air for 3 hours in an aluminium oxide crucible in a tube furnace. The sample was heated up at a rate of 300°C/hr. After cooling, the sample was ground with a pestle and mortar.

The resulting phosphor contained 6 atom % of terbium with respect to the total content of gadolinium and terbium and consisted according to its X-ray diffraction spectrum of 100 % gadolinium gallium aluminium garnet having the formula $(Gd_{0.94}Tb_{0.06})_3(Ga_{0.5}Al_{0.5})_5O_{12}$.

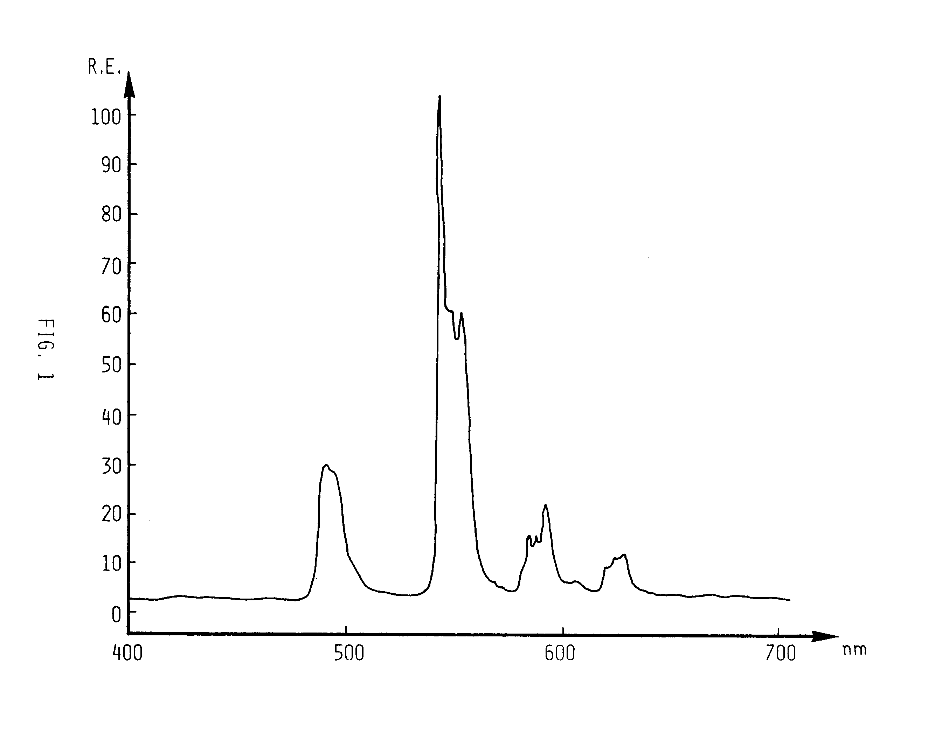

Figure 1 represents the relative energy (R.E.) versus wavelength (nm) curve of the phosphor prepared according to Example 2. The excitation proceeded with X-rays of 100 kV and a relative emission intensity of 139 was observed.

COMPARATIVE EXAMPLE 1

8.47950 g of $Gd_{1.88}Tb_{0.12}(C_2O_4)_4 . 4.43 H_2O$ (from Example 1) and 4.02150 g of $Ga_2O_3$ were mixed for 10 minutes in a planetary ball mill in the presence of 12.5 ml of ethanol. 4 such mixtures were prepared and the ethanol evaporated off. These mixtures were fired together in the same aluminium oxide crucible at 1450°C in air for 3 hours in a tube furnace. The sample was heated up at a rate of 300°C/hr. After cooling, the sample was ground with a pestle and mortar.

The resulting phosphor contained 6 atom % terbium with respect to the total content of gadolinium and terbium and consisted according to its X-ray diffraction spectrum of 100% gadolinium gallium garnet having the formula $(Gd_{0.94}Tb_{0.06})_3 Ga_5O_{12}$.

Upon excitation with X-rays of 100 kV a relative emission intensity (R.E.I.) of the 542 nm band of 75 was observed.

EXAMPLES 3 to 7

Following the procedure described in Example 2 phosphors of the above defined empirical formula, wherein A is Tb; w = 0; y = 5.00; and x = 0.02; 0.03; 0.09; 0.10 and 0.12 respectively were prepared.

The relative emission intensities (R.E.I.) of the 542 nm band are indicated in the following Table 1 together with the $I_{383} nm/I_{542} nm$ peak height ratio, which gives a measure of the emission at wavelengths below 478 nm to that above 478 nm.

TABLE 1

| Example No. | x | R.E.I. at 542 nm | $I_{383}nm/I_{542}nm$ |
|---|---|---|---|
| 3 | 0.02 | 78 | 0.255 |
| 4 | 0.03 | 76 | 0.138 |
| 2 | 0.06 | 139 | 0.012 |
| 5 | 0.09 | 134 | 0.003 |
| 6 | 0.10 | 55 | 0.023 |
| 7 | 0.12 | 36 | 0.005 |
| COMPARATIVE EXAMPLE 1 | 0.06 | 75 | 0.017 |

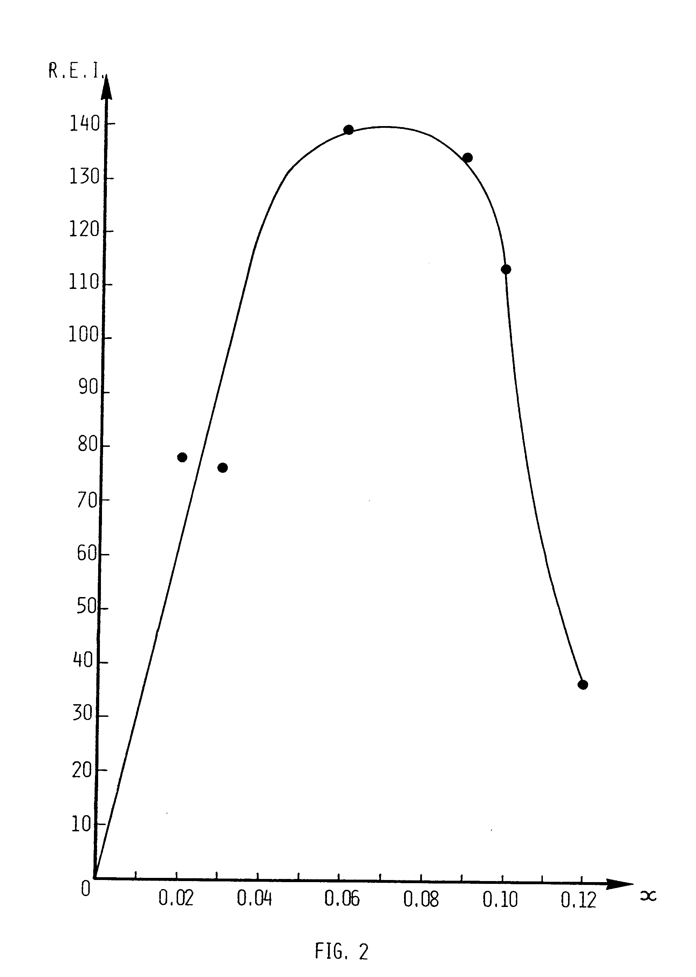

The R.E.I. values at 542 nm are plotted against x in Figure 2.

EXAMPLES 8 to 13

Following the procedure described in Example 2 phosphors of the above defined empirical formula, wherein A is Tb; x = 0.06; w = 0; z = 0.4; and y = 4.904; 4.936; 4.968; 5.00; 5.04 and 5.088 respectively were prepared.

The relative emission intensities (R.E.I.) of the 542 nm band are indicated in the following Table 2 :

TABLE 2

| Example No. | y | R.E.I. at 542 nm |
|---|---|---|
| 8 | 4.904 | 65; 69 |
| 9 | 4.936 | 100 |
| 10 | 4.968 | 121 |
| 11 | 5.00 | 123 |
| 12 | 5.04 | 93 |
| 13 | 5.088 | 75 |

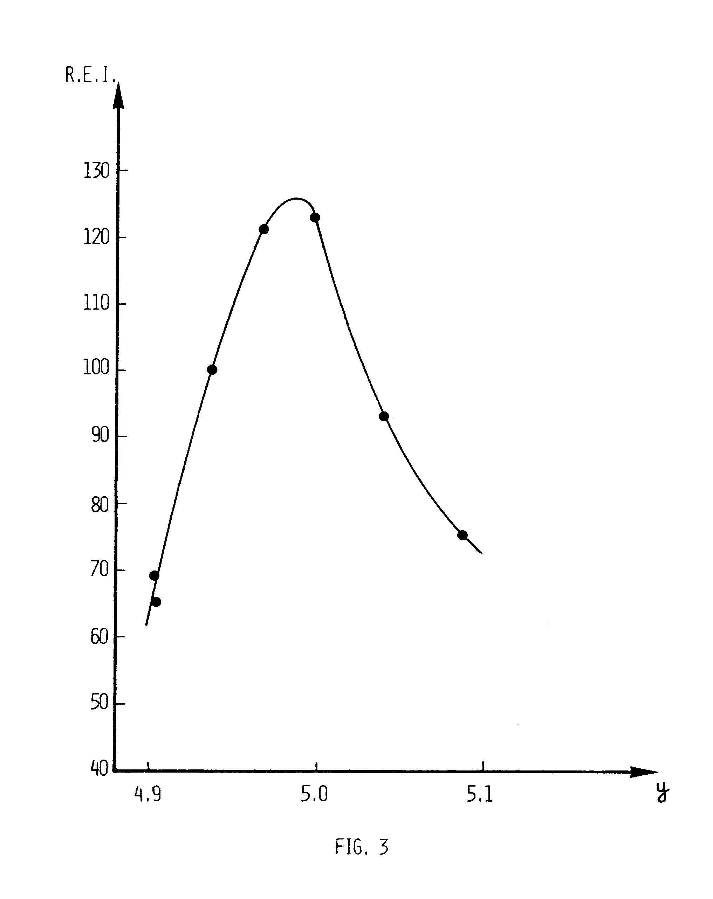

The R.E.I. values at 542 nm are plotted against y in Figure 3.

EXAMPLES 14 to 17

Following the procedure described in Example 2 phosphors of the above defined empirical formula, wherein A is Tb; x = 0.06; w = 0; y = 5.00 and z = 0.2; 0.6; 0.8 and 1.0 respectively were prepared.

The relative emission intensities (R.E.I.) of the 542 nm band together with those for Example 2, Example 11 and comparative Example 1 are indicated in the following Table 3.

TABLE 3

| Example No. | z | R.E.I. at 542 nm |
|---|---|---|
| comparative Example 1 | 0 | 75 |
| 14 | 0.2 | 92 |
| 11 | 0.4 | 123 |
| 2 | 0.5 | 139 |
| 15 | 0.6 | 112 |
| 16 | 0.7 | 84 |
| 17 | 0.8 | 42 |
| 18* | 1.0 | 25 |

* According to X-ray diffraction analysis this sample consisted of a mixture of $GdAlO_3$ and $Gd_3Al_5O_{12}$ phases.

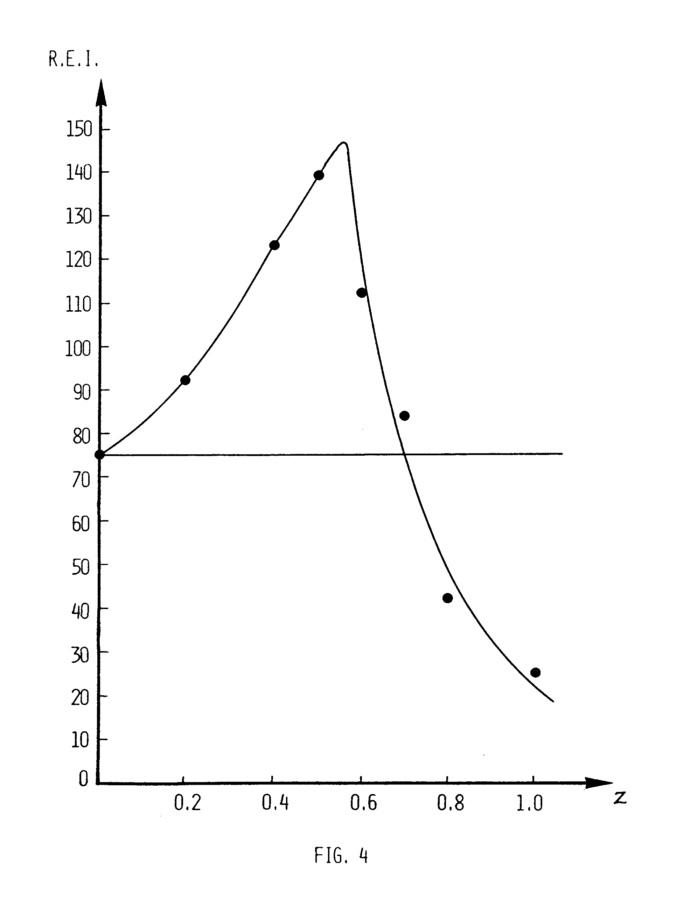

The R.E.I. values at 542 nm are plotted against z in Figure 4.

EXAMPLE 19

31.18390 g of yttrium oxide and 3.3646 g of terbium oxide were dissolved in 300 ml concentrated nitric acid with heating and the resulting solution evaporated until a nitrate glass was formed. This was dissolved in 375 ml of doubly distilled water and 900 ml of 0.6 M ammonium oxalate solution were added dropwise with stirring, whereupon $Y_{1.88}Tb_{0.12}(C_2O_4)_3$ precipitated. This was separated by filtration and washed with doubly distilled water till neutral. The oxalate was then dried overnight at 150°C. Yield : 78.90 g of $Y_{1.88}Tb_{0.12}(C_2O_4)_3 \cdot 3.61\ H_2O$.

EXAMPLES 20 to 24

Following the procedure described in Example 2 phosphors of the above defined empirical formula, where A is Tb; Ln is Y; $z = 0$; $x = 0.06$; $y = 5.00$ and $w = 0, 0.3133, 0.47, 0.6266, 0.846$ and $0.94$ respectively were prepared.

The relative emission intensities (R.E.I.) of the 542 nm band together with that of Comparative Example 1 are indicated in the following Table 4.

TABLE 4

| Example No. | w | R.E.I. at 542 nm |
|---|---|---|
| Comparative Example 1 | 0.0 | 75 |
| 20 | 0.3133 | 92 |
| 21 | 0.47 | 97 |
| 22 | 0.6266 | 81 |
| 23 | 0.846 | 74 |
| 24 | 0.94 | 74 |

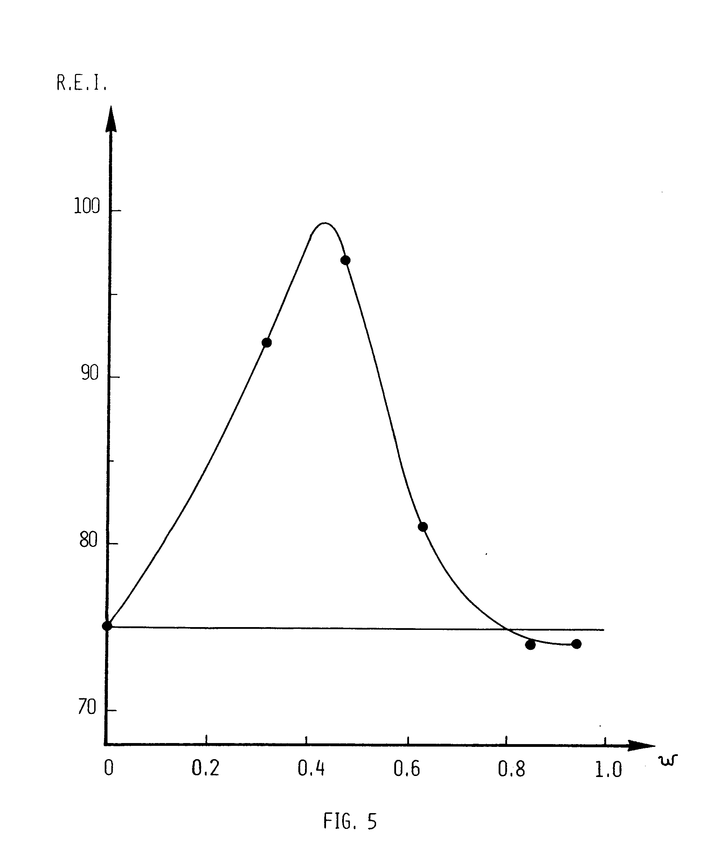

The R.E.I. values at 542 nm are plotted against w in Figure 5.

EXAMPLES 25 to 29

Following the procedure described in Example 2 phosphors of the above defined empirical formula, wherein A is Tb; Ln is Y; $x = 0.06$; $y = 5.00$; $w = 0.864$; $z = 0.1, 0.4, 0.6, 0.8$ and $1.0$ respectively were prepared.

The relative emission intensities (R.E.I.) of the 542 nm band together with that of Example 23 are indicated in the following Table 5.

TABLE 5

| Example No. | z | R.E.I. at 542 nm |
|---|---|---|
| 23 | 0.0 | 74 |
| 25 | 0.1 | 103 |
| 26 | 0.4 | 113 |
| 27 | 0.6 | 95 |
| 28 | 0.8 | 42 |
| 29 | 1.0 | 25 |

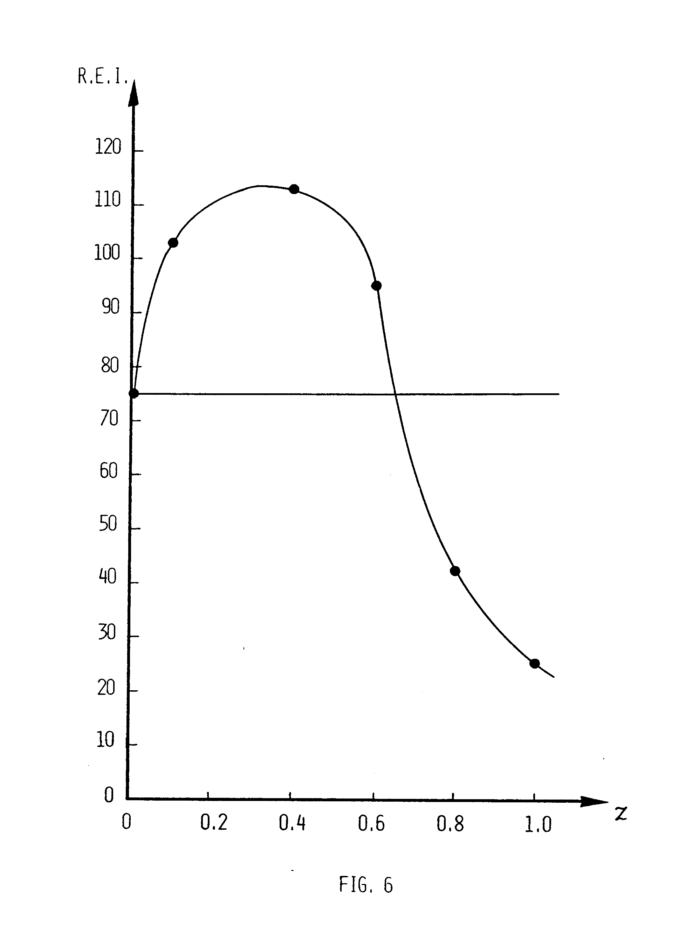

The R.E.I. values at 542 nm are plotted against z in Figure 6.

EXAMPLES 30 to 32

Following the procedure described in Example 2, phosphors of the above defined empirical formula, wherein A is Tb; Ln is Y; $x = 0.06$; $y = 5.00$; $z = 0.7$; $w = 0, 0.3133, 0.47, 0.6266$ and $0.94$ respectively were prepared.

The relative emission intensities (R.E.I.) of the 542 nm band together with that of Example 16 are indicated in the following Table 6.

TABLE 6

| Example No. | w | R.E.I. at 542 nm |
|---|---|---|
| 16 | 0.0 | 84 |
| 30 | 0.3133 | 116 |
| 31 | 0.6266 | 60 |
| 32 | 0.94 | 67 |

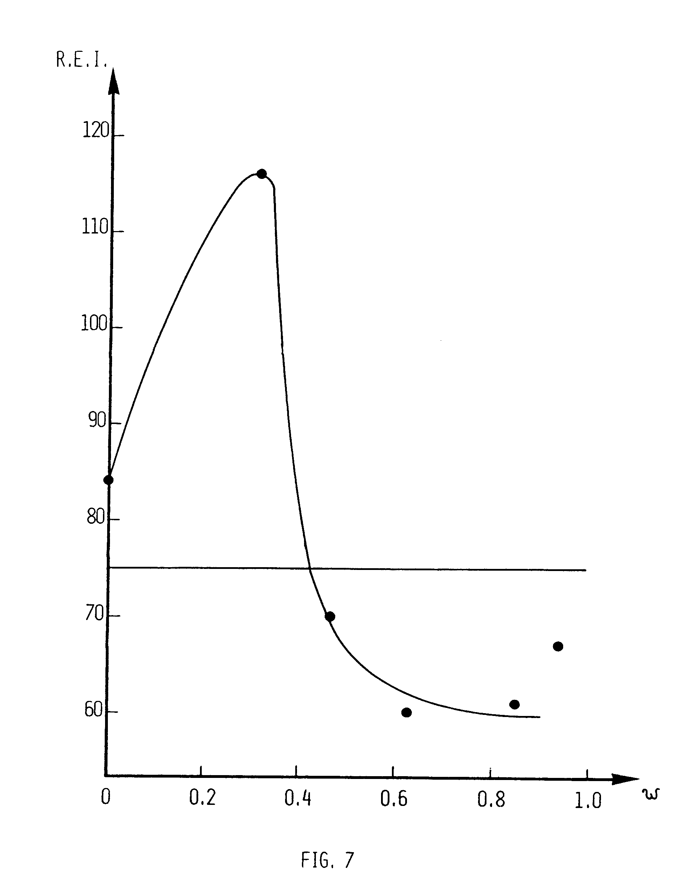

The relative emission intensities (R.E.I.) at 542 nm are plotted against w in Figure 7.

EXAMPLES 33 to 35

Following the procedure described in Example 2, phosphors of the above defined empirical formula, wherein A is Tb; Ln is Y; $x = 0.06$; $y = 5.00$; $w = 0.3133$; and $Z = 0.3$; 0.8 and 0.9 were prepared.

The relative emission intensity (R.E.I.) of the 542 nm band together with that of Examples 20 and 30 are indicated in the following Table 7.

TABLE 7

| Example No. | z | R.E.I. at 542 nm |
|---|---|---|
| 20 | 0.0 | 92 |
| 33 | 0.3 | 192 |
| 30 | 0.7 | 116 |
| 34 | 0.8 | 82 |
| 35 | 0.9 | 24 |

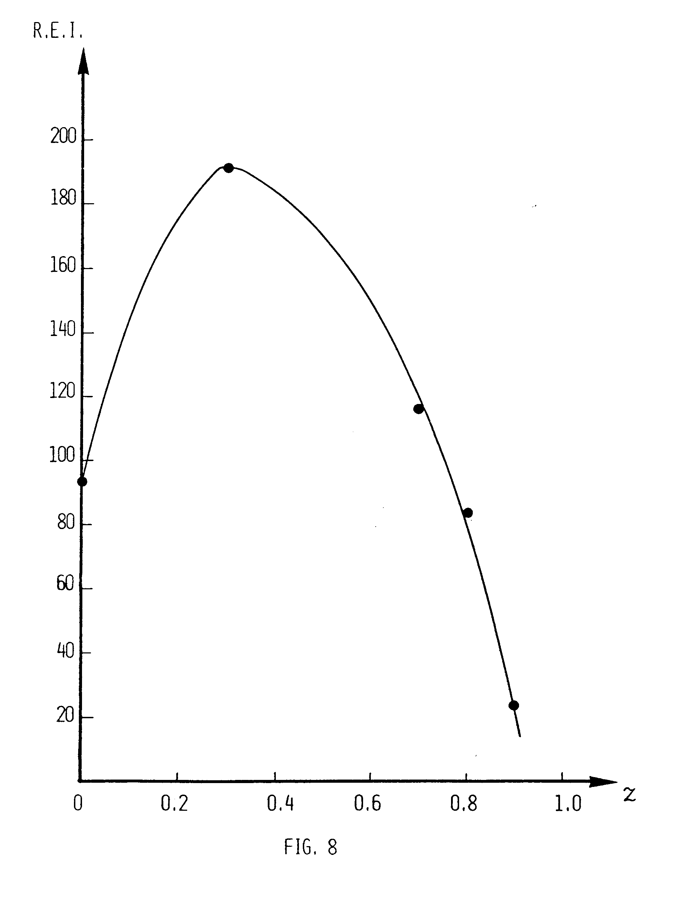

The R.E.I. values at 542 nm are plotted against z in Figure 8.

EXAMPLE 36

3.8362 g of gadolinium oxide (containing 5.8 wt % water), 0.2553 g of terbium oxide (containing 4.6 wt % water), 2.1092 g of gallium oxide and 0.7666 g of $\alpha$-aluminium oxide were mixed for 15 minutes in a planetary ball-mill in the presence of 7.5 ml of ethanol. After evaporating off the ethanol, the mixture was fired in a compressed state at 1550°C in air for 3 hours in an aluminium oxide crucible in a tube furnace. The sample was heated up at a rate of 300°C/hr. After cooling, the sample was ground with a pestle and mortar.

The resulting phosphor contained 6 atom % of terbium with respect to the total content of gadolinium and terbium and consisted, according to X-ray diffraction analysis, of 100% gadolinium gallium aluminium garnet having the formula $(Gd_{0.94}Tb_{0.06})_{2.89}(Ga_{0.6}Al_{0.4})_{5.11}O_{12}$. Upon excitation with X-rays of 100 kVp a relative emission intensity (R.E.I.) of the 542 nm band of 98 was observed.

COMPARATIVE EXAMPLE 2

5.11131 g of gadolinium oxide (containing 5.8 wt % water), 0.33673 g of terbium oxide (containing 4.6 wt % water) and 4.6874 g of gallium oxide were mixed for 10 minutes in a planetary ball-mill in the presence of 12.5 ml of ethanol. After evaporating off the ethanol, the mixture was fired in a compressed state at 1550°C in air for 3 hours in an aluminium oxide crucible in a tube furnace. The sample was heated up at a rate of 300°C/hr. After cooling, the sample was ground in a pestle and mortar.

The resulting phosphor contained 6 atom % of terbium with respect to the total content of gadolinium and terbium and consisted, according to X-ray diffraction analysis, of 100% gadolinium gallium garnet having the formula $(Gd_{0.94}Tb_{0.06})_{2.89}Ga_{5.11}O_{12}$. Upon excitation with X-rays of 100 kVp a relative emission intensity (R.E.I.) of the 542 nm band of 84 was observed.

EXAMPLES 37 to 41

Following the procedure described in Example 36, phosphors of the above defined empirical formula, wherein A is Tb; w = 0; y = 5.11; z = 0.4 and x = 0.001; 0.005; 0.01: 0.02: and 0.04 respectively were prepared.

The relative emission intensities (R.E.I.) of the 542 nm band together with that of Example 36 are indicated in the following Table 8 together with the $I_{383}$ nm/$I_{542}$ nm peak height ratios, which give a measure of the emission at wavelengths below 478 nm to that above 478 nm.

TABLE 8

| Example No. | x | R.E.I. at 542 nm | $I_{383}$ nm/$I_{542}$ nm |
|---|---|---|---|
| 37 | 0.001 | 10 | 4.56 |
| 38 | 0.005 | 15 | 2.57 |
| 39 | 0.010 | 38 | 1.17; 1.26 |
| 40 | 0.020 | 67 | 0.504 |
| 41 | 0.040 | 88 | 0.128 |
| 36 | 0.060 | 98 | 0.054 |

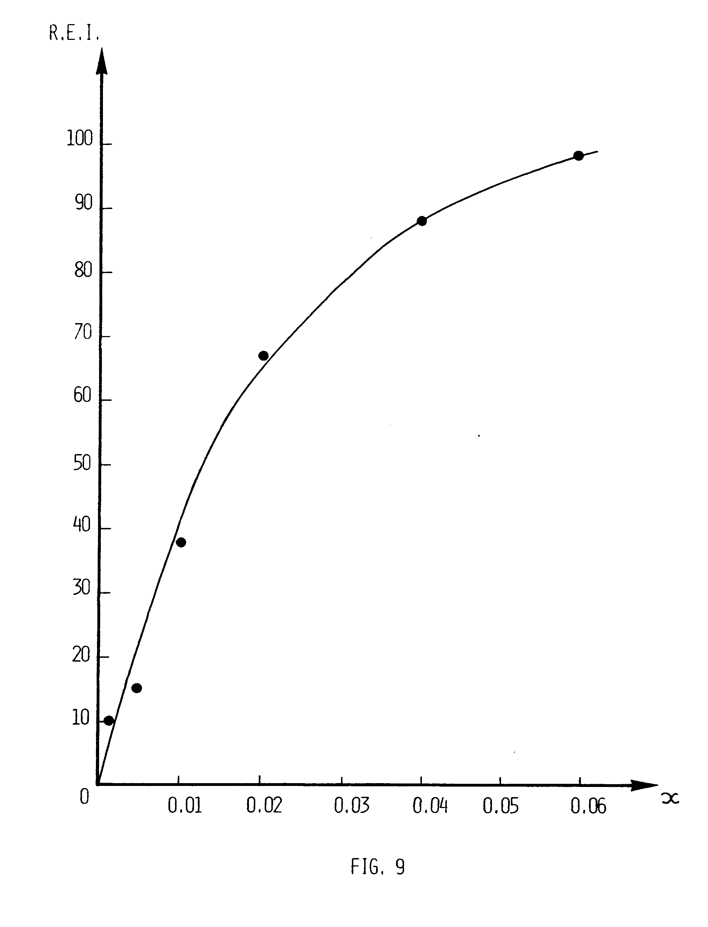

The R.E.I. values at 542 nm are plotted versus x in Figure 9.

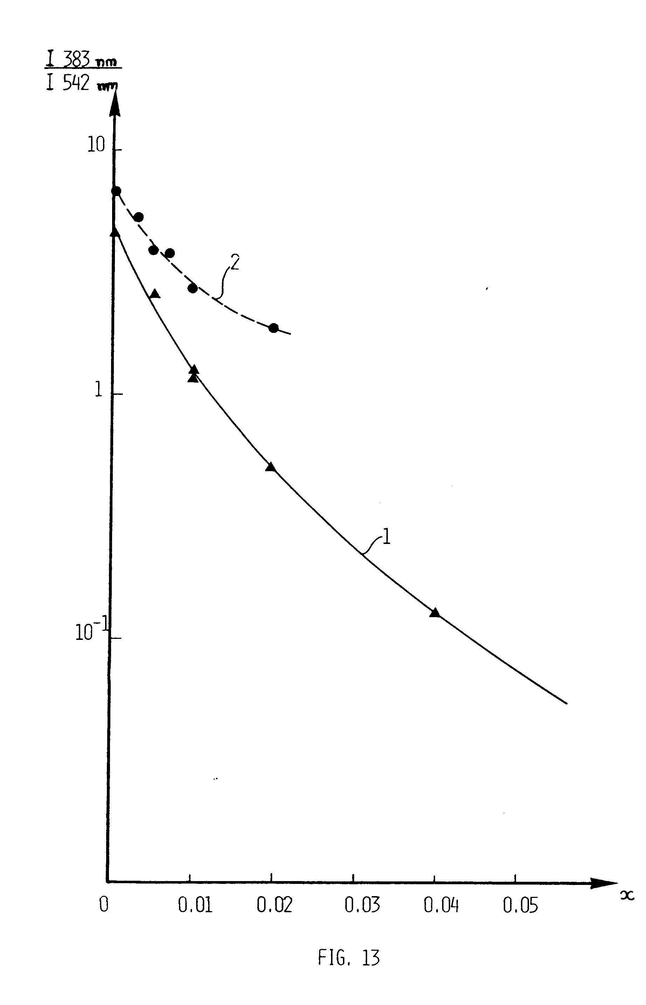

The $I_{383}$ nm/$I_{542}$ nm peak height ratios versus x are plotted in semi-logarithmic plot in curve 1 of Fig. 13.

COMPARATIVE EXAMPLE 3

Following the procedure described in Comparative Example 2, a phosphor with the formula $(Gd_{0.98}Tb_{0.02})_{2.89}$ $Ga_{5.11}O_{12}$ wasprepared. Upon excitation with X-rays of 100 kVp a relative emission intensity (R.E.I.) of the 542 nm band of 31 was observed.

EXAMPLES 42 to 45

Following the procedure described In Example 36, phosphors of the above defined empirical formula, wherein A is Tb; w = 0; y = 5.11; x = 0.02; and z = 0.2; 0.4; 0.6; 0.8 and 1.0 respectively were prepared.

The relative emission intensities (R.E.I.) of the 542 nm band together with that of Example 40 and Comparative Example 3 are indicated in the following Table 9.

TABLE 9

| Example No. | z | R.E.I. at 542 nm |
|---|---|---|
| Comparative Example 3 | 0 | 31 |
| 42 | 0.2 | 50 |
| 40 | 0.4 | 67 |
| 43 | 0.6 | 62 |
| 44 | 0.8 | 50 |
| 45* | 1.0 | 29 |

* According to X-ray diffraction analysis this sample consisted of a mixture of $GdAlO_3$ and $Gd_3Al_5O_{12}$ phases.

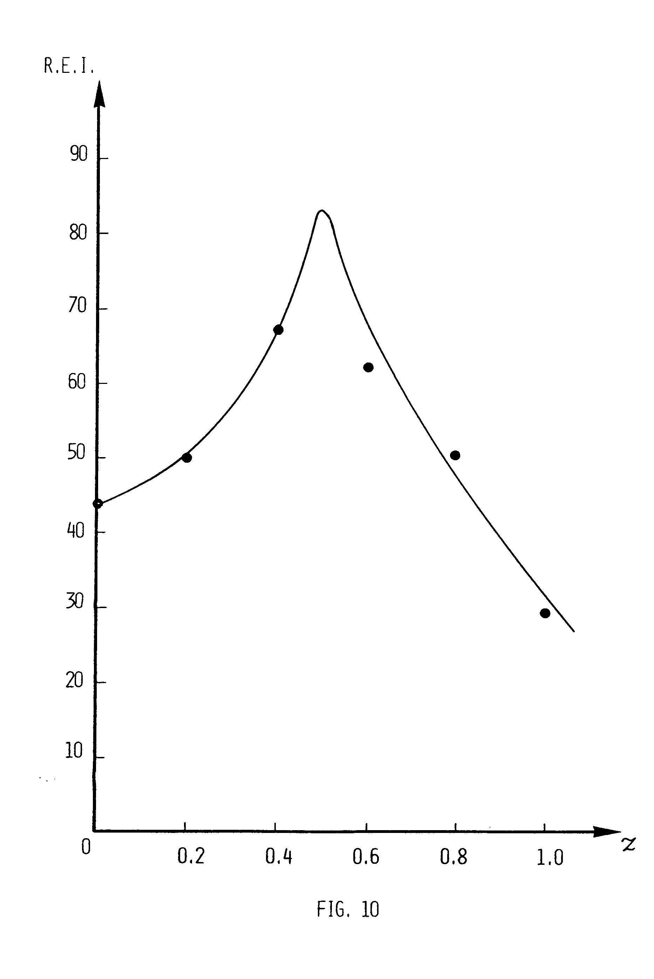

The R.E.I. values at 542 nm are plotted against z in Figure 10.

EXAMPLE 46

5.2889 g of gadolinium oxide (containing 5.8 wt % water), 0.3437 g of terbium oxide (containing 4.6 wt % water), 3.85908 g of gallium oxide, 0.51300 g of $\alpha$-aluminium oxide and 0.50060 g of barium fluoride were mixed for 10 minutes in a planetary ball-mill in the presence of 10 ml of ethanol. After evaporating off the ethanol, the mixture was fired in a compressed state at 1530°C in air for 16 hours in an aluminium crucible in a tube furnace. The sample was heated up at a rate of 300°C/hr. After cooling, the sample was ground with a pestle and mortar, washed with 1.5 N nitric acid to remove the residual $BaF_2$, filtered, washed with doubly destilled water and then dried.

The resulting phosphor contained 6 atom % of terbium with respect to gadolinium and terbium and consisted, according to X-ray diffraction analysis, of 100% gadolinium gallium aluminium garnet having the formula $(Gd_{0.94}Tb_{0.06})_{2.91}(Ga_{0.8}Al_{0.2})_{5.09}O_{12}$. Upon excitation with X-rays of 100 kVp a relative emission intensity (R.E.I.) of the 542 nm band of 89 was observed.

EXAMPLE 47

5.85435 g of gadolinium oxide (containing 5.8 wt % water), 0.04230 g of terbium oxide (containing 4.6 wt % water), 3.01291 g of gallium oxide and 1.09390 g of $\alpha$-aluminium oxide were mixed for 10 minutes in a planetary ball-mill in the presence of 16 mm of ethanol. After evaporating off the ethanol the mixture was fired in a compressed state at 1450°C, in air for 3 hours in an aluminium oxide crucible in a tube furnace. The sample was heated up at a rate of 300°C/hr. After cooling, the sample was ground with a pestle and mortar.

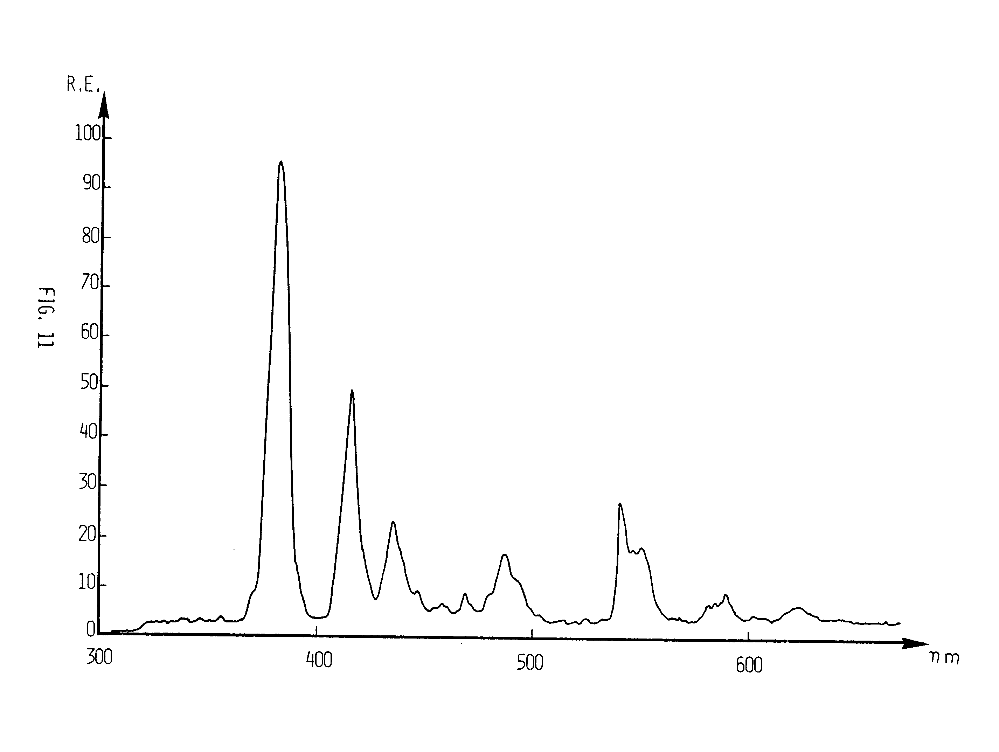

The resulting phosphor contained 0.7 atom % terbium with respect to the total content of gadolinium and terbium and consisted, according to X-ray diffraction analysis, of 100% gadolinium gallium aluminium garnet with formula : $(Gd_{0.993}Tb_{0.007})_{2.912}(Ga_{0.6}Al_{0.4})_{5.088}O_{12}$. Upon excitation with X-rays of 100 kVp a blue emission was observed with a relative emission intensity (R.E.I.) of the wavelengths below 478 nm of 60. Figure 11 represents the relative energy (R.E.) versus wavelength (nm) curve for this phosphor.

COMPARATIVE EXAMPLE 4

5.31630 g of gadolinium oxide (containing 5.8 wt % water), 0.04390 g of terbium oxide (containing 4.6 wt % water) and 4.64030 g of gallium oxide were mixed for 10 minutes in a planetary ball-mill in the presence of 16 ml of ethanol. After evaporating off the ethanol the mixture was fired at 1450°C in air for 3 hours in an aluminium oxide crucible in a tube furnace. The sample was heated up at a rate of 300°C/hr. After cooling, the sample was ground with a pestle and mortar.

The resulting phosphor contained 0.8 atom % terbium with respect to the total content of gadolinium and terbium and consisted, according to X-ray diffraction analysis, of 100% gadolinium gallium garnet with the formula $(Gd_{0.992}Tb_{0.008})_{2.88}Ga_{5.12}O_{12}$. Upon excitation with X-rays of 100 kVp a blue emission was observed with a relative emission intensity (R.E.I.) of 26 at the wavelengths below 478 nm.

EXAMPLES 48 to 53

Following the procedure described in Example 47, phosphors of the above defined empirical formula, wherein A is Tb; w = 0; y = 0.5; z = 5.088; and x = 0.001, 0.003, 0.005, 0.01 and 0.02 respectively were prepared.

The relative emission intensities (R.E.I.) of the wavelengths below 478 nm together with that for Example 47 are indicated in the following Table 10 together with the $I_{383}$ nm/$I_{542}$ nm peak height ratios, which give a measure of the emission at wavelengths ($\lambda$) below 478 nm to that above 478 nm.

TABLE 10

| Example No. | x | R.E.I. at $\lambda < 478$ nm | $I_{383}$ nm/$I_{542}$ nm |
|---|---|---|---|
| 48 | 0.001 | 17.0 | 6.68 |
| 49 | 0.003 | 28.5 | 5.28 |
| 50 | 0.005 | 38.3 | 3.92 |
| 47 | 0.007 | 53.9; 60.3 | 3.80 |
| 51 | 0.008 | 54.3 | 3.35 |
| 52 | 0.01 | 50.0 | 2.74 |
| 53 | 0.02 | 50.5 | 1.87 |

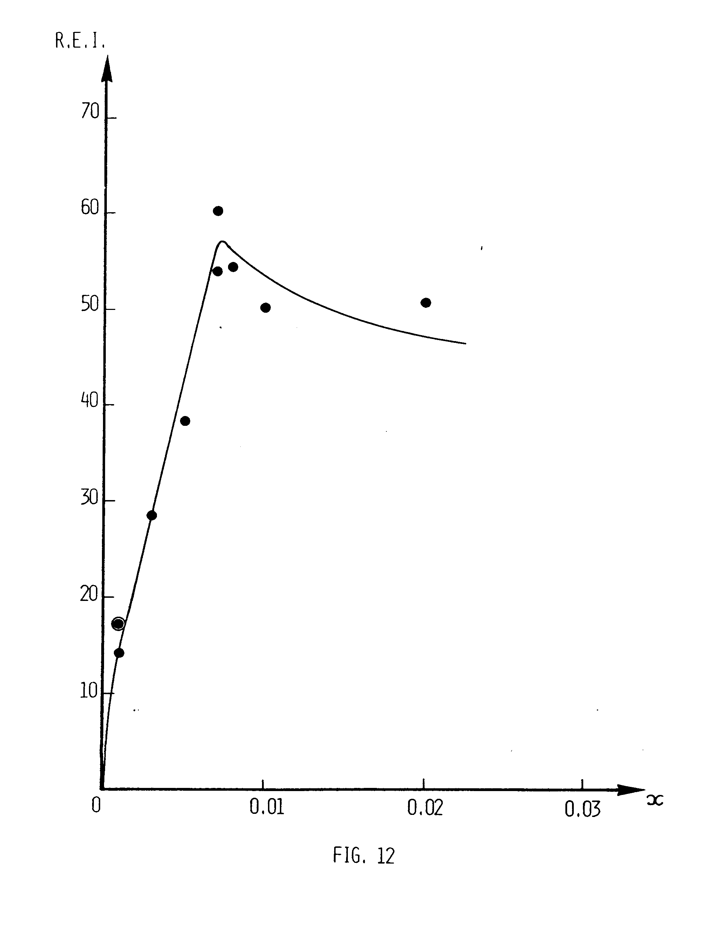

The R.E.I. values for wavelengths below 478 nm are plotted against x in Figure 12.

In curve 2 of Figure 13 the $I_{383}$ nm/$I_{542}$ nm peak height ratios for Examples 47 to 53 are plotted against x in a semi-logarithmic plot. There is a clear shift in the spectral distribution of the emission to wavelengths ($\lambda$) below 478 for the Examples 47 to 53 compared with Examples 36 to 41.

EXAMPLES 54 to 62

Following the procedure described in Example 47, phosphors of the above defined empirical formula, wherein A is Tb; w = 0; x = 0.008; z = 0.5 and y = 4.904, 4.936, 4.968, 5.0, 5.04, 5.088, 5.108, 5.12 and 5.15 respectively were prepared.

The relative emission intensities (R.E.I.) of the wavelengths below 478 nm are indicated in the following Table 11.

TABLE 11

| Example No. | y | R.E.I. at 478 nm |
|---|---|---|
| 54 | 4.904 | 24.6 |
| 55 | 4.936 | 27.3 |
| 56 | 4.968 | 29.6 |
| 57 | 5.0 | 30.6 |
| 58 | 5.04 | 32.8; 33.3 |
| 59 | 5.088 | 46.5 |
| 60 | 5.108 | 50.4 |
| 61 | 5.12 | 47.2 |
| 62 | 5.15 | 36.3; 38.6 |

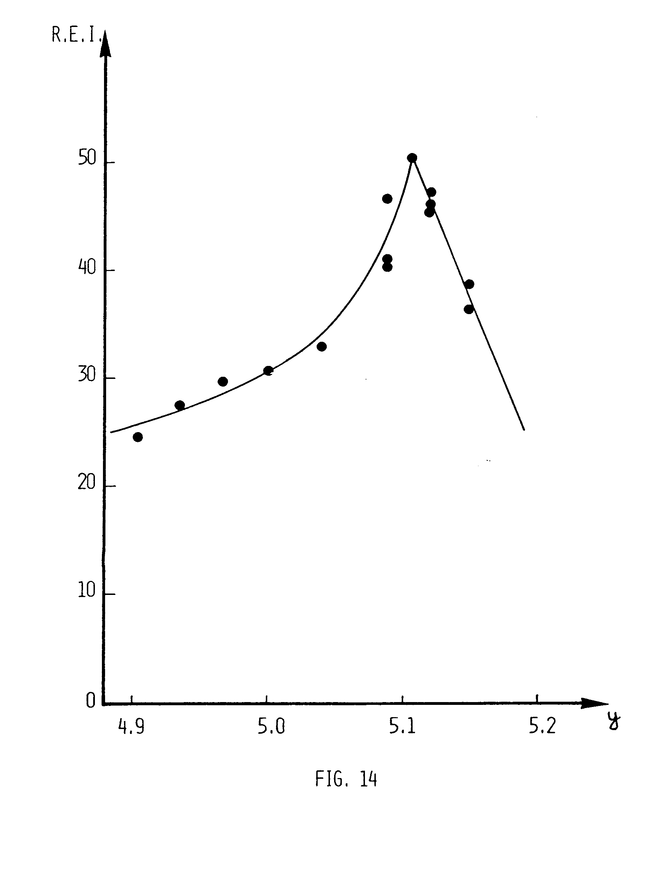

The R.E.I. values for wavelengths below 478 nm are plotted against y in Figure 14.

EXAMPLES 63 to 69

Following the procedure described in Example 47, phosphors of the above defined empirical formula, wherein A is Tb; w = 0; x = 0.008; y = 5.12 and z = 0.2; 0.3, 0.4, 0.6, 0.7 0.8 and 1.0 respectively were prepared.

The relative emission intensities (R.E.I.) of the wavelengths below 478 nm together with that of comparative Example 4 and Example 59 are indicated in the following Table 12.

TABLE 12

| Example No. | z | R.E.I. at λ < 478 nm |
|---|---|---|
| Comparative Example 4 | 0.0 | 26 |
| 63 | 0.2 | 35.7 |
| 64 | 0.3 | 32.5 |
| 65 | 0.4 | 48 |
| 59 | 0.5 | 47.2 |
| 66 | 0.6 | 44 |
| 67 | 0.7 | 26.7 |
| 68 | 0.8 | 22.6 |
| 69 | 1.0 | 0.7* |

* According to X-ray diffraction analysis this sample consisted of a mixture of $GdAlO_3$ and $Gd_3Al_5O_{12}$ phases.

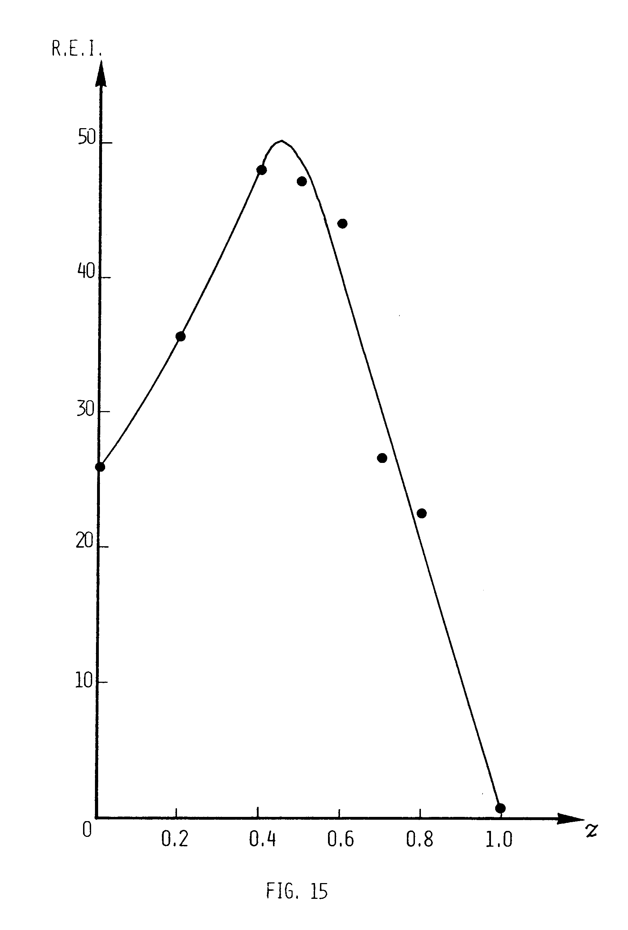

The R.E.I. values for wavelengths below 478 nm are plotted against z in Figure 15.

In an X-ray conversion screen the phosphor used according to the present invention is present in dispersed form in a supported or self-supporting binder layer, wherein the binder is an organic polymer or mixture of such polymers.

For use in the production of X-ray conversion screens according to the present invention the phosphor particles have preferably a size in the range of 0.1 to 20 $\mu$m, preferably in the range of 1 to 10 $\mu$m.

The grain size can be adjusted after firing and cooling by grinding, e.g. in a ball-mill.

The present invention includes a method for recording of information wherein the X-ray conversion screen according to the present invention is exposed image-wise to X-rays and the light emitted thereby is received by a photon-detection means, e.g. a photo-cathode emitting electrons when struck by visible light, a photoconductor obtaining increased electrical conductivity or a photochemical detector, e.g. photosensitive silver halide grains making part of a photographic silver halide emulsion layer material for forming therein by development a visible image.

The screens of the present invention are particularly suited for use in the X-ray range which extends from about 20 keV to 150 keV.

Suitable binders for forming a binder layer incorporating said phosphors in dispersed form are film forming organic polymers, e.g., a cellulose acetate butyrate, polyalkyl (meth)acrylates, e.g. polymethyl methacrylate, a polyvinyl-n-butyral e.g. as described in the United States Patent Specification 3,043,710, a copoly(vinyl acetate/vinyl chloride) and a copoly(acrylonitrile/butadiene/styrene) or a copoly(vinyl chloride/vinyl acetate/vinyl alcohol) or mixture thereof.

To provide high X-ray emission it is preferable that a minimum amount of binder be employed to form the X-ray conversion screen, so that the fluorescent layer of the screen substantially consists of phosphor particles dispersed in the binder. However, a very small amount of binding agent may result in a too brittle layer, so a compromise has to be made.

The thickness of a supported phosphor layer is preferably in the range of 0.05 to 0.5 mm.

The coverage of the phosphor is preferably in the range from about 300 to 750 g/m2.

For the preparation of the X-ray conversion screen, also called phosphor screen or fluorescent screen, the phosphor particles are intimately dispersed in a solution of the binder and then coated on a support and dried.

The coating of the present phosphor binder layer may proceed according to any usual technique, e.g. by spraying, dip-coating or doctor blade coating. After coating, the solvent(s) of the coating mixture is (are) removed by evaporation, e.g. by drying in an air current of 60°C.

An ultrasonic treatment can be applied to improve the packing density and to perform the de-aeration of the phosphor-binder combination. Before the optional application of a protective coating the phosphor-binder layer may be calendered to improve the packing density (i.e. the number of grams of phosphor per cm3 of dry coating).

In preparing an X-ray conversion screen according to the present invention the phosphor-binder composition may be coated on a wide variety of supports, e.g. cardboard and plastic film, e.g. polyethylene terephthalate film. The supports used in the fluorescent screens of the present invention may be coated with (a) subbing layer(s) for improving the adherence of the phosphor coating thereto.

12

Optionally, a light-reflecting layer is provided between the phosphor-containing layer and its support to enhance the light-output e.g. for exposure of a silver halide emulsion material. Such a light-reflecting layer may contain white pigment particles dispersed in a binder, e.g. titanium dioxide particles, or may be made of a vapour-deposited metal layer, e.g. an aluminium layer having a high reflection power for ultraviolet radiation and blue light.

The image sharpness obtainable with an imaging system consisting of a an X-ray conversion screen according to the present invention and a photographic silver halide material can be improved considerably by incorporating a fluorescent light-absorbing dye, called "screening dye", into the fluorescent screen material. As oblique radiation has a longer path in the screen material, it is attenuated by the screening dye or dyes to a greater extent than the radiation impinging normally. The term "screening dye" used herein includes dyestuffs (i.e. coloured substances in molecularly divided form) as well as pigments.

Diffuse radiation reflecting from the support of the X-ray conversion screen can be mainly attenuated in an anti-reflection layer containing the screening dyes subjacent to the phosphor layer.

The screening dye does not have to be removed from the screen and may therefore be any dye or pigment absorbing in the emission spectrum of the phosphor. Thus black substances such as carbon black particles of an average size of 0.15 to 0.60 $\mu$m incorporated in said anti-reflection layer or the phosphor layer yield quite satisfactory results.

To the phosphor layer a protective coating may be applied preferably having a thickness in the range of 5 to 25 $\mu$m and comprising a film-forming polymeric material that is photographically inert towards a silver halide emulsion layer.

Polymeric materials suitable for that purpose include e.g. cellulose derivatives (e.g. cellulose nitrate, cellulose triacetate, cellulose acetate propionate, cellulose acetate butyrate), polyamides, polystyrene, polyvinyl acetate, polyvinyl chloride, silicone resins, poly(acrylic ester) and poly(methacrylic ester) resins, and fluorinated hydrocarbon resins, and mixtures of the foregoing materials. Representative examples of various individual members of these binder materials include the following resinous materials : poly(methyl methacrylate), poly(n-butyl methacrylate), poly(isobutyl methacrylate), copolymers of n-butyl methacrylate and isobutyl methacrylate, copolymers of vinylidene fluoride and hexafluoropropylene, copolymers of vinylidene fluoride and trifluorochloroethylene, copolymers of vinylidene fluoride and tetrafluoroethylene, terpolymers of vinylidene fluoride, hexafluoropropylene, and tetrafluoroethylene, and poly(vinylidene fluoride).

According to a particular embodiment the protective layer is composed of a crosslinked polymer mass obtained by an acid-catalyzed reaction of a polymer or mixture of polymers containing reactive hydrogen atoms and a crosslinking agent, the crosslinking agent being e.g. an organic compound containing a plurality of etherified N-methylol groups.

According to a preferred embodiment the outer face of the screen intended for contact with a photographic silver halide emulsion material contains a solid particulate material that has a static friction coefficient ($\mu$) at room temperature (20°C) of less than 0.50 on steel as described in the published German Patent Application 2,616,093.

Antistatic substances can be applied to the screen to reduce the risk of electrical potential differences resulting in sparking. For example, the screens are treated with the "ANTI-STAT" 6 spray, which leaves an odourless transparent antistatic deposit. ANTI-STAT is a trade name of Braun Laboratories Div. Bartt Chemical Co., Inc., Philadelphia, Pa., U.S.A.

The present X-ray conversion screens may contain the above defined phosphor for use in X-ray conversion in combination with other phosphor particles, e.g. blue and/or green-light emitting phosphors, e.g. the oxysulphides of lanthanum, gadolinium or lutecium activated with trivalent terbium. The preparation of these phosphors proceeds e.g. as described in US-P 3,418,246, 3,418,246, 3,418,247 and 3,515,675. X-ray conversion screens containing such phosphors are described in US-P 3,725,704. Other phosphors having a strong green light emission are described in US-P 3,617,743, e.g. LaOCl:0.05Tb and LaOBr:0.05Tb:0.005Ce (see Fig. 2b and Fig. 2c of said US-Patent Specification).

A combination particularly suitable for radiography comprises two separate X-ray fluorescent screens and a photosensitive material comprising a support with a silver halide emulsion layer coated on each surface of said support, wherein each of the fluorescent screens is arranged adjacent to one of the silver halide emulsion layers as described e.g. in US-P 4,130,428. The silver halide emulsion layers are sensitized with spectral sensitizing dye(s) in such a way that the silver halide is sensitive to light in the wavelength range of 450-570 nm. The spectrally sensitized silver halide may be present in each silver halide emulsion layer in an amount equivalent with a silver amount of less than 4 g per m2 without resulting in an objectionable "cross-over" and loss of image-sharpness as defined in said US-P 4,130,428. In a particular useful X-ray recording technique a pair of the present X-ray image conversion screens is used in a cassette and placed in direct contact with a photographic silver halide emulsion film, which being double-side emulsion coated makes contact at each of its sides with one of said screens.

In order to exclude local defects in the form of developable centres in the silver halide film used in conjunction with an X-ray image conversion screen containing rare earth-metal phosphor particles including traces of radioactive elements, the screen may contain a light-diffusing layer or sheet, which contains numerous discrete light-scattering volumes of a substance or substances distributed at random in a binder medium or partially embedded therein, such volumes having a mean size not larger than 20 μm, said layer or sheet being located so that fluorescent light of said phosphor particles can penetrate therethrough and leave the screen. A screen containing said substance(s) is described in US-P 4,149,083.

According to another embodiment the X-ray image conversion screen according to the present invention is used free-standing as fluoroscopic screen for visual inspection of the fluorescent light image emitted thereby under the influence of an image-wise X-ray irradiation.

According to still another embodiment the X-ray image conversion screen according to the present invention is used in an evacuated X-ray image intensifier tube in such a way as to allow the light emitted by the conversion screen to strike a photo-cathode producing photo-electrons that after having been accelerated are used to strike a cathode-ray luminescent screen.

The following example 70 illustrates the manufacture of an X-ray conversion screen according to the present invention. All parts, percentages and ratios are by weight unless otherwise stated.

EXAMPLE 70

A phosphor prepared according to Example 1 was dispersed in a ball mill in a 30 % solution of poly-n-butylmethacrylate as binder in toluene, the phosphor to binder ratio being 8 : 1.

Ball-milling was effected till a grind with fineness 7 NS measured with an Hedgman Grind Gage was obtained (see ASTM D 120 specifications). The average particle size of the phosphor particles in the final grind was 7 μm.

After filtration and deaeration, the dispersion was coated on a polyethylene terephthalate support at a phosphor coverage of 600 g per m2.

After drying the obtained X-ray conversion screen material was introduced as a pair of screens in a common X-ray cassette. The thus obtained cassette was used for the exposure of medical radiographic film that is double side coated with a green sensitized silver halide emulsion layer. Very satisfactory results from the viewpoint of image sharpness and speed where obtained on using the X-ray film described in Example 2 of US-P 4,130,428.

## Claims

1. A process for the conversion of X-rays into blue and/or green light with a phosphor which on exposure to X-rays emits light the spectrum of which contains main intensity lines below 478 nm and/or main intensity lines between 530 and 570 nm, characterized in that said phosphor has the following empirical formula :

$$(Gd_{1-w-x} \, Ln_w \, A_x) \, _{8-y} \, (Ga_{1-z} \, Al_z) \, _y \, O_{12}$$

wherein : Ln is Y; A is one or more rare earth activator elements other than gadolinium, lutetium and praseodymium, and at least 50 atom % of A is trivalent terbium; $1.0 > w \geq 0$; $0.12 > x > 0$; $5.20 > y > 4.88$; $0.66 > z > 0$ for $0.5 > w \geq 0$ and $0.8 > z > 0$ for $1.0 > w \geq 0.5$.

2. A process according to claim 1, wherein y is in the range $4.92 \geq y \geq 5.10$.

3. A process according to claim 1 or 2, wherein x is in the range $0.12 > x > 0.025$ for emission of green light.

4. A process according to claim 1 or 2, wherein x is in the range of $0.06 > x > 0.0025$ for the emission of blue light.

5. A process according to claim 3, wherein the w, x, y and z values are in the ranges $0.8 > w \geq 0$; $0.105 > x > 0.035$; $5.16 > y > 4.94$; $0.6 \geq z \geq 0.1$ respectively.

14

6. A process according to claim 3, wherein the $Tb^{3+}$ concentration is in the range of 5 to 9 atom % with respect to the total content of rare earth elements.

7. A process according to claim 4, wherein the $Tb^{3+}$ concentration is in the range of 0.6 to 2 atom % with respect to the total content of rare earth elements.

8. A process according to any of the preceding claims, wherein the phosphor is present in dispersed form in a binder layer, the binder of which is an organic polymer or mixture of such polymers.

9. A process according to claim 8, wherein the phosphor is present in said layer at a coverage in the range of 300 to 750 g/m2.

10. A process according to any of the preceding claims, wherein the phosphor has a particle size in the range of 0.1 to 20 $\mu$m.

**Revendications**

1. Procédé destiné à la transformation de rayons X en lumière bleue et/ou verte à l'aide d'une substance fluorescente qui, lorsqu'on l'expose à des rayons X, émet une lumière dont le spectre contient des lignes d'intensité principale inférieure à 478 nm et/ou des lignes d'intensité principale comprise entre 530 et 570 nm, caractérisé en ce que la substance fluorescente répond à la formule empirique ci-après :

$$(Gd_{1-w-x}Ln_wA_x)_{8-y} (Ga_{1-z}Al_z)_y O_{12}$$

dans laquelle Ln représente Y; A représente un ou plusieurs éléments des terres rares différents de gadolinium, lutécium et praséodymium, avec cette réserve que A représente au moins 50 pourcentage atomique de terbium trivalent; $1,0 > w \geqq 0$; $0,12 > x > 0$; $5,20 > y > 4,88$; $0,66 > z > 0$ pour $0,5 > w \geqq 0$ et $0,8 > z > 0$ pour $10 > w \geqq 0,5$.

2. Procédé selon la revendication 1, caractérisé en ce que $4,92 \geqq y \geqq 5,10$.

3. Procédé selon les revendications 1 ou 2, caractérisé en ce que $0,12 > x > 0,025$ pour émission de lumière verte.

4. Procédé selon les revendications 1 ou 2, caractérisé en ce que $0,06 > x > 0,0025$ pour émission de lumière bleue.

5. Procédé selon la revendication 3, caractérisé en ce que $0,8 > w \geqq 0$; $0,105 > x > 0,035$; $5,16 > y > 4,94$; $0,6 \geqq z \geqq 0,1$ respectivement.

6. Procédé selon la revendication 3, caractérisé en ce que la concentration de $Tb^{3+}$ est comprise dans l'intervalle de 5 à 9 pourcentage atomique par rapport à la teneur totale en éléments des terres rares.

7. Procédé selon la revendication 4, caractérisé en ce que la concentration de $Tb^{3+}$ est comprise dans l'intervalle de 0,6 à 2 pourcentage atomique par rapport à la teneur totale en éléments des terres rares.

8. Procédé selon l'une quelconque des revendications précédentes, caractérisé en ce que la substance fluorescente se trouve sous forme dispersée dans une couche de liant, celui-ci étant constitué d'un polymère organique ou d'un mélange de tels polymères.

9. Procédé selon la revendication 8, caractérisé en ce que la substance fluorescente se trouve dans cette couche dans un rapport allant de 300 à 750 g/m².

10. Procédé selon l'une quelconque des revendications précédentes, caractérisé en ce que la granulométrie de la substance fluorescente est de 0,1 à 20 $\mu$m.

**Patentansprüche**

1. Verfahren zur Umwandlung von Röntgenstrahlen in blaues und/oder grünes Licht mit einem Phosphor, der, wenn zu Röntgenstrahlen ausgesetzt, Licht emittiert, dessen Spektrum Hauptintensitätslinien unter 478 nm und/oder Hauptintensitätslinien zwischen 530 und 570 nm enthält, dadurch gekennzeichnet, daß der Phosphor die folgende Bruttoformel hat:

$$(Gd_{1-w-x}Ln_wA_x)_{8-y}(Ga_{1-z}Al_z)_yO_{12}$$

in der bedeuten:

Ln    Yttrium und/oder Lutetium;

A    eines oder mehrere von Gadolinium, Lutetium und Praseodymium verschiedene, aktivierende Seltenerdelemente, wobei mindestens 50 Atom-% von A dreiwertiges Terbium ist;

$1,0 > w \geq 0$;

$0,12 > x > 0$;

$5,20 > y > 4,88$;

$0,66 > z > 0$ für $0,5 > w \geq 0$ und $0,8 > z > 0$ für $1,0 > w \geq 0,5$.

2. Verfahren nach Anspruch 1, dadurch gekennzeichnet, daß $4,92 \geq y \geq 5,10$.

3. Verfahren nach Anspruch 1 oder 2, dadurch gekennzeichnet, daß $0,12 > x > 0,025$ für die Emission von grünem Licht.

4. Verfahren nach Anspruch 1 oder 2, dadurch gekennzeichnet, daß $0,06 > x > 0,0025$ für die Emission von blauem Licht.

5. Verfahren nach Anspruch 3, dadurch gekennzeichnet, daß $0,8 > w \geq 0$; $0,105 > x > 0,035$; $5,16 > y > 4,94$ und $0,6 \geq z \geq 0,1$.

6. Verfahren nach Anspruch 3, dadurch gekennzeichnet, daß die $Tb^{3+}$ Konzentration 5-9 Atom-% vom Gesamtgehalt an Seltenerdelementen beträgt.

7. Verfahren nach Anspruch 4, dadurch gekennzeichnet, daß die $Tb^{3+}$ Konzentration 0,6-2 Atom-% vom Gesamtgehalt an Seltenerdelementen beträgt.

8. Verfahren nach irgendeinem der vorhergehenden Ansprüche, dadurch gekennzeichnet, daß der Phosphor in dispergierter Form in einer Bindemittelschicht enthalten ist, deren Bindemittel ein organisches Polymeres oder Gemisch solcher Polymerer ist.

9. Verfahren nach Anspruch 8, dadurch gekennzeichnet, daß der Phosphor in dieser Schicht in einem Verhältnis von 300-750 g/m² enthalten ist.

10. Verfahren nach irgendeinem der vorhergehenden Ansprüche, dadurch gekennzeichnet, daß der Phosphor eine Teilchengröße im Bereich von 0,1-20 μm hat.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15